# EUROPEAN PATENT SPECIFICATION

(11) **EP 3 174 025 B1**
(45) Date of publication and mention of the grant of the patent: **09.01.2019**
(21) Application number: 16198746.6
(22) Date of filing: 14.11.2016
(51) Int. Cl.: G08B 25/10, G08B 25/00

(54) **INCIDENT MANAGEMENT USING A MOBILE DEVICE**
STÖRFALLMANAGEMENT UNTER VERWENDUNG EINER MOBILEN VORRICHTUNG
GESTION DES INCIDENTS AU MOYEN D'UN DISPOSITIF MOBILE

(30) Priority: 30.11.2015 US 201514954643
(43) Date of publication of application: 31.05.2017
(73) Proprietor: Honeywell International Inc., Morris Plains, NJ 07950 (US)
(72) Inventor: MOHANAM, Damodharan, Morris Plains, NJ 07950 (US); DHAYALAN, Sivasanthanam, Morris Plains, NJ 07950 (US); MANOHARAN, Sivarajan, Morris Plains, NJ 07950 (US)
(74) Representative: Houghton, Mark Phillip

(56) References cited:
- EP-A1- 2 219 163
- WO-A1-2013/175076
- WO-A1-2014/124497
- WO-A1-2014/169232
- US-A1- 2011 071 880
- US-A1- 2012 196 556
- US-A1- 2012 218 102
- US-A1- 2015 358 794
- US-B1- 8 896 436

## Description

### TECHNICAL FIELD

The disclosure relates generally to incident management systems for sites or location and more particularly to incident management for sites or locations using a mobile device.

### BACKGROUND

Incident management systems for sites or locations are often tied to centralized monitoring stations where a user may monitor multiple sites or locations. The centralized stations may include multiple monitors for viewing the multiple locations and may provide the monitoring user with plenty of display space to display information about a site or location and a protocol for use in monitoring the site or location and responding to incidents. In locations where centralized monitoring services are not prevalent or expensive to implement, it may be beneficial to provide site or location monitoring functions from a mobile device.

European Patent Application Publication No. EP 2219163 describes an emergency password bypass feature for mobile phones, and a display of locations including an individual's in-case-of-emergency contact people.

United States Patent Application Publication No. US 20110071880 describes selecting responders for an emergency, based on proximity of each responder to each emergency.

### SUMMARY

The present invention in its various aspects is as set out in the appended claims.

The disclosure relates generally to incident management systems for sites or location and more particularly to incident management for sites or locations using a mobile device. In a first example, a mobile device may comprise a user interface including a display, a network interface, and a controller operably coupled to the user interface and the network interface. The controller is configured to receive an indication of an alarm and an alarm location via the network interface, and display, on the display, a map. According to the present invention, the map comprises an alarm icon representing the received alarm, the alarm icon placed on the map at the alarm location, and an emergency service icon representing an emergency service that services the alarm location, the emergency service that services the alarm location having an emergency service location, the emergency service icon placed on the map at the emergency service location. The controller is further configured to accept a selection of the emergency service icon via the user interface and, upon selection of the emergency service icon, initiate a communication with the emergency service that services the alarm location.

The preceding summary is provided to facilitate an understanding of some of the features of the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following description of various illustrative examples of the disclosure in connection with the accompanying drawings, in which:
Figure 1 is a schematic view of a server according to aspects of the present disclosure;
Figure 2 is a schematic view of an illustrative mobile device in accordance with aspects of the present disclosure;
Figure 3 is a view of the illustrative mobile device of Figure 2 displaying a map with multiple interactable icons;
Figure 4 is a view of the illustrative mobile device of Figure 2 displaying a map with multiple interactable icons and information proximate the interactable icons; and
Figure 5 is a view of the illustrative mobile device of Figure 2 displaying an alert message and an interactable acknowledgment button;

While the disclosure is amenable to various modifications and alternative forms, specifics thereof have been shown by way of example in the drawings and will be described in detail. It should be understood, however, that the intention is not to limit aspects of the disclosure to the particular illustrative examples described. On the contrary, the intention is to cover all modifications, equivalents, and alternatives falling within the spirit and scope of the disclosure.

### DESCRIPTION

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural reference unless the content clearly dictates otherwise. As used in this specification and the appended claims, the term "or" is generally employed in its sense including "and/or" unless the content clearly dictates otherwise.

It is noted that references in the specification to "an example", "some examples", "other examples", etc., indicate that the example described may include a particular feature, structure, or characteristic, but every example may not necessarily include the particular feature, structure, or characteristic. Moreover, such phrases are not necessarily referring to the same example. Further, a particular feature, structure, or characteristic is described in connection with an example, it is contemplated that the feature, structure, or characteristic may be applied to other examples whether or not explicitly described unless clearly stated to the contrary.

The present disclosure is directed generally to incident management for sites or locations using a mobile device. For instance, a person, such as an incident manager, may be responsible for managing incidents occurring at specific sites or locations. Each of the sites or locations may have different protocols for dealing with incidents or require knowledge of different information for handling the incidents. As a few examples, different emergency services may handle emergencies that occur for the different sites or locations for which the incident manager is responsible. Accordingly, the incident manager may need to know different numbers not only for the different emergencies that can occur at a given site or location, but different numbers for the emergency services that handle the same types of emergencies for different sites or locations. Accordingly, systems, devices, and methods for simplifying the monitoring of the sites and locations for the incident manager may be beneficial. In some embodiments, the incident manager may use a mobile device with limited display area to manage incidents at multiple sites or locations.

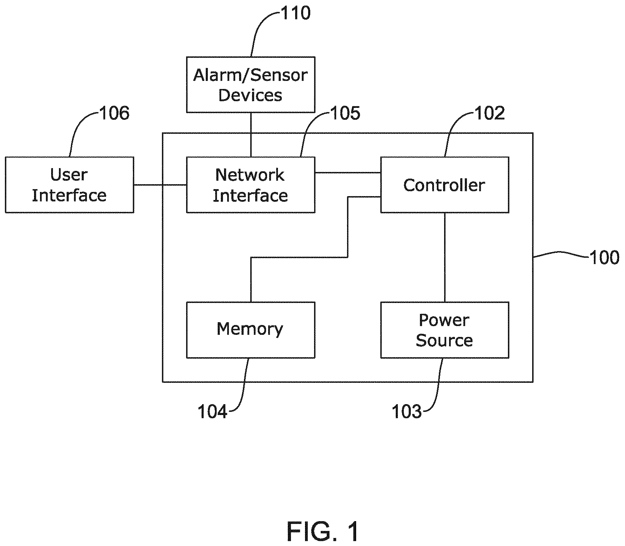

Figure 1 depicts an example schematic of server 100 that may be used to implement the site or location monitoring techniques of the present disclosure. In some examples server 100 may include a controller 102, power source 103, 104, and network interface 105. Generally, controller 102 may be configured to control server 100. For example, controller 102 may read or write information to or from memory 104, or communicate information to external devices external, or receive information from external devices, through network interface 105.

Controller 102 may include a programmable microprocessor such as a central processing unit (CPU) or the like. Such a programmable microprocessor may allow a user to adjust the control logic of controller 102, allowing for flexibility of server 100 in how server 100 operates with respect to sending and receiving information. In at least some examples, controller 102 may not be a single component. For example, controller 102 may include multiple components positioned at disparate locations within server 100 in order to perform the various described functions. For example, certain functions may be performed in one component of controller 102, while other functions may be performed in a separate component of controller 102.

Server 100 may include a power source 103 connected to controller 102. Power source 103 may generally include a power supply configured to condition received power into a form suitable for use by controller 102. In some cases, power source 103 may additionally condition power and supply the conditioned power to other components of server 100. In some cases, power source 103 includes a battery backup power source.

Server 100 may further include a memory 104, and controller 102 may store information on, and read information from, the memory 104. In some cases, memory 104 may store information related to one or more external devices, for example client devices. For instance, memory 104 may store site information such as contact information for a number of different clients. Memory 104 may further store information associated with sites or locations that are being monitored, such as addresses and manager and/or security contact information. In at least some embodiments, memory 104 may store contact information for each site or location for a site or location manager that has been tasked with monitoring the site or location.

In some cases, controller 102 may include an internal memory circuit that controller 102 may store information on, and read information from. In these examples, server 100 may not include a separate memory 104 from the internal memory of controller 102. Memory 104, and/or the internal memory of controller 102, may be volatile memory, non-volatile memory, or a combination of volatile memory and non-volatile memory. In some cases, the memory 104 may include a hard drive, an optical memory, a Random Access Memory (RAM), and/or any other suitable memory as desired.

Server 100 may further include a network interface 105. Network interface 105 may allow controller 102 to communicate and receive information over a network. In some examples, network interface 105 may be specific to a particular network, such as a cellular telephony or data network, a Wi-Fi network, or other wide area or local area networks. In at least some examples, network interface 105 may allow controller 102 to communicate and receive information over the internet. In still other examples, network interface 105 may allow controller 102 to communicate with remote devices over multiple types of networks (e.g. Internet and cellular telephony).

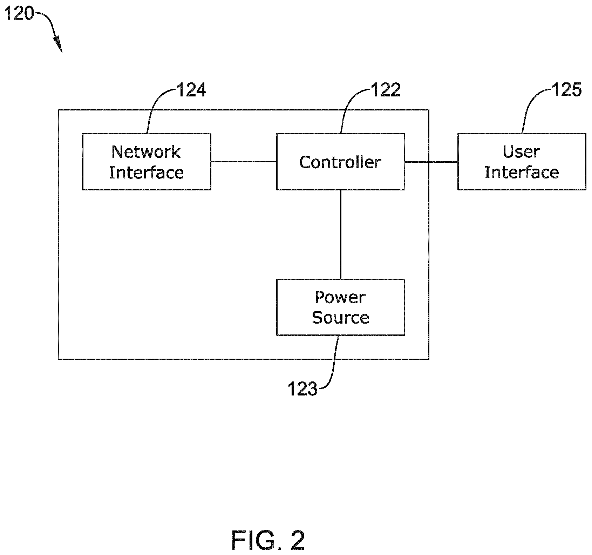

Figure 2 depicts a schematic of an example mobile device 120. Mobile device 120 may include a controller 122, a power source 123, and a network interface 124. Mobile device 120 may further include user interface 125. Although not shown in Figure 2, in some embodiments, mobile device 120 may further include a location services module. The location services module may identify the location of the mobile device 120, such as via cell tower triangulation, via the Global Positioning System (GPS) and/or any other suitable technique.

Power source 123 may include any suitable power source, which in some cases includes a power storage device to power mobile device 120. In some examples, power source 123 may be a non-rechargeable lithium-based battery. In other examples, the non-rechargeable battery may be made from other suitable materials. In still other examples, power source 123 may include a rechargeable battery. In still further examples, power source 123 may include other types of energy storage devices such as a capacitor, fuel cell, atomic battery, and/or any other suitable power source, as desired.

Network interface 124 may allow controller 122 to communicate and receive information over a network. In this manner, controller 122 may communicate information to, and/or receive information from, controller 102 of server 100.

User interface 125 may generally comprise a display device and one or more input devices. For instance, the display device may display a graphical user interface to a user, while the input device, such as a keyboard, may allow a user to make selections on the graphical user interface. In at least some embodiments, for instance where mobile device 120 comprises a cellular phone or smart phone, the display device may additionally comprise an input device. In these embodiments, the display device may comprise a touch-sensitive display device allowing a user to interact with the displayed graphical user interface through manipulation of the display device using touch.

In at least some embodiments, server 100 may be connected to one or more alarms or sensor devices 106. For example, the one or more alarms or sensor devices 106 may be configured to communicate information to server 100 through network interface 105. In some of these examples, the one or more alarms or sensor devices 106 may be wireless devices that are connected to server 100 over a wireless network. In other embodiments, however, the one or more alarms or sensor devices 106 may be connected to server 100 over a wired network.

In some embodiments, server 100 may be located at a site or location and be connected to the alarms and/or other devices at the site or location, either wirelessly or through wired connections. In other embodiments, server 100 may be remote to a location and may receive signals from multiple different locations. In these embodiments, a network device located at each site may receive the signal from the alarm or other device and communicate the received signal to server 100 over one or more networks, ultimately reaching server 100 through network interface 105. In this manner, a single server may service multiple different sites, which may be a less expensive solution than implementing a server performing the techniques of the present disclosure at each individual site or location.

In any case, the one or more alarms or sensor devices 106 may be configured to communicate a signal to server 100 upon specific conditions occurring. For instance, the one or more alarms or sensor devices 106 may include a door sensor. The door sensor may be configured to communicate a signal to server 100 when a door is opened and/or when the door is closed. In another example, the one or more alarms or sensor devices 106 comprises a fire alarm. The fire alarm may be configured to communicate a signal to server 100 upon detection of a fire (e.g. upon detection of a threshold level of heat or of certain gases such as carbon dioxide or carbon monoxide). In still other embodiments, the one or more alarms or sensor devices 106 may include a motion sensor. The motion sensor may be configured to communicate a signal to server 100 upon detection of a threshold level of movement. However, these are just some examples. In general, the one or more alarms or sensor devices 106 may comprise any common alarm or sensor devices for use in securing a site or location or monitoring the site or location for dangerous conditions.

Server 100 may be further configured to communicate a signal to external devices, such as mobile device 120, upon receiving a signal from an alarm or other device. For instance, network interface 105 may not only connect server 100 to the one or more alarms or sensor devices 106. Network interface 105 may further connect to a network common to network interface 124. In this manner, server 100 may send information to mobile device 120, and mobile device 120 may send information to server 100.

The signal communicated from the alarm or other device may include information identifying the specific alarm or device. In some embodiments, server 100 may store, for instance in memory 104, information related to each alarm or other device of the one or more alarms or sensor devices 106. Server 100 may include in memory 104 information related to the geographic location of the alarm or other device, such as a street address or GPS coordinates. In some embodiments, server 100 may further include information relating to an owner or operator of the site or location where the alarm or device is located, such as a name and contact information. In still further embodiments, server 100 may store information relating to an incident manager for the site or location associated with the alarm or other device, such as contact information for a mobile device of the incident manager.

Upon receiving a signal from the alarm or other device, server 100 may look up the contact information for the incident manager and may communicate a signal to a mobile device, for instance mobile device 120, of the incident manager. Once mobile device 120 has received the communication from server 100, mobile device 100 may display information about the alarm or other device at the display device of mobile device 120.

In some embodiments, the signal communicated from server 100 may include a variety of information related to the alarm or other device. For instance, the signal may include information such as the geographical location of the alarm or device (e.g. street address or GPS coordinates), contact information for the owner or operator of the site or location associated with the alarm or other device, contact information and/or geographical location of one or more emergency services associated with the alarm or device or the site or location associated with the alarm or device. In other embodiments, however, the signal may simply comprise an identification of the alarm or device. In these embodiments, mobile device 120 may store all of the other information relating to the alarm or device in a memory of mobile device 120. Whether mobile device 120 or server 100 stores the information related to a particular site or location, the stored information may be edited by a user. For instance, the user may edit the contact information for the incident manager, the owner or operator, and/or the information for the specific emergency services associated with a site or location. In some embodiments, server 100 may communicate a default database to mobile device 120 for storage containing information about sites and locations that the user may edit.

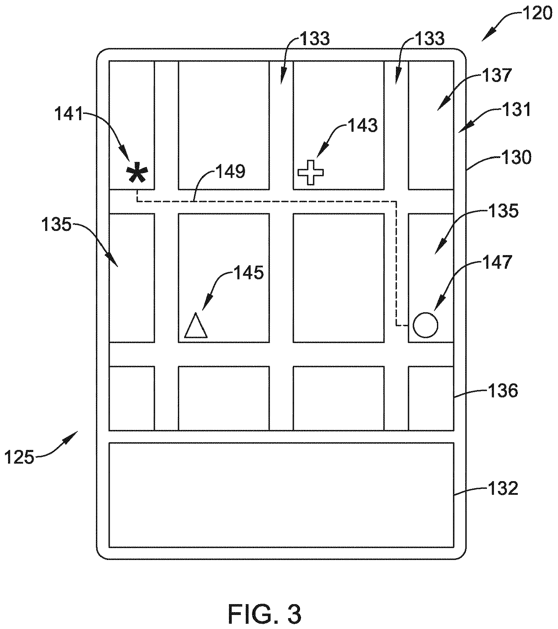

Figure 3 shows a plan view of mobile device 120 including housing 130 and user interface 125. In the example of Figure 3, user interface 125 may include display device 131, depicted displaying graphical user interface (GUI) 136 along with input device 132. Input device 132 may comprise a physical keyboard or a touch-sensitive display. However, in some embodiments, mobile device 120 may not include input device 132. Rather, display device 131 may comprise a touch-sensitive display such that display device 131 comprises both a display device and input device 132. In even further embodiments, display device 131 may comprise a touch-sensitive and mobile device 120 may still include input device 132, allowing a user multiple options by which to enter input into mobile device 120.

Upon receiving the signal from server 100, mobile device 120 may cause map 137 to be displayed at display device 131, as illustrated by GUI 136. Map 137 may include streets 133 and buildings 135. Additionally, map 137 may include icons 141, 143, 145, and 147. Icon 141 may represent the alarm or other device and the location of the alarm or other device on map 137 may represent the geographic location of the alarm or device. Although depicted as a star on map 137, in other embodiments the specific icon may differ. Additionally, in at least some embodiments, the specific icon chosen for icon 141 may differ depending on the type of alarm or device that communicated a signal to server 100.

Icons 143, 145, and 147 all generally represent locations of various emergency services. For instance, icon 143 may represent the location of police services or other security services, while icon 145 may represent the location of a hospital or ambulance station. Icon 147 may indicate the location of a fire station. Although represented as a triangle, cross, and circle, it should be understood that these are examples only. In other embodiments, the specific icons may be icons that more easily visually distinguish between the emergency services. For instance, the location for the fire station may comprise flames, while the location for the police may comprise a badge commonly associated with police services. These are just examples.

In some further embodiments, map 137 may display route 149 connecting icon 143 and one or more of the icons 143, 145, 147. In at least some embodiments, mobile device 120 may cause route 149 to be displayed connecting icon 143 and the most relevant emergency service related to the alarm or other device that communicated the signal to server 100. For instance, if the alarm is a fire alarm, mobile device may cause route 149 to be displayed connecting icon 143 and icon 147, representing a fire station, as in Figure 3. However, in the case where the alarm or device is a door alarm, mobile device 120 may cause route 149 to be displayed connecting icon 143 and icon 145, representing a police station.

In some embodiments, each of icons 141, 143, 145, and 147 may be selectable by a user through user interface 125. For instance, a user may touch display device 131, where display device 131 is a touch-sensitive display, to select one or more of icons 141, 143, 145, and 147, or the user may select one or more of icons 141, 143, 145, and 147 using input device 132. Upon receiving a selection of one or more icons 141, 143, 145, and 147, mobile device 120 may perform one or more actions.

In some embodiments, upon receiving a selection of one of icons 141, 143, 145, and 147, mobile device 120 may initiate a communication. Where the icon represents an emergency service, mobile device 120 may initiate communication with that emergency service. Where the icon represents the alarm or other device, mobile device 120 may initiate communication with the owner or operator associated with the site or location where the alarm or device is located. To initiate communication, mobile device 120 may initiate a phone call where mobile device 120 received from server 100, or had stored in a memory of mobile device 120, a telephone number associated with the selected icon. Alternatively, where mobile device 120 received or had stored in memory a phone number, mobile device 120 may initiate a text message. In further embodiments, mobile device 120 may initiate an e-mail where mobile device 120 received, or had stored in memory, an e-mail address. Where mobile device 120 received or stored in memory both a phone number and an e-mail address, mobile device 120 may allow the user to select whether mobile device 120 initiates a phone call, a text message, or an e-mail. In this manner, a user can be apprised of the type of alarm, the closest emergency services, and contact information for the alarm and emergency services without having to remember all of this information for different sites or locations. Additionally, the map display may allow for quick visual assessment of the alarm or device and distances to emergency services and for quick response by the user through the interactable icons.

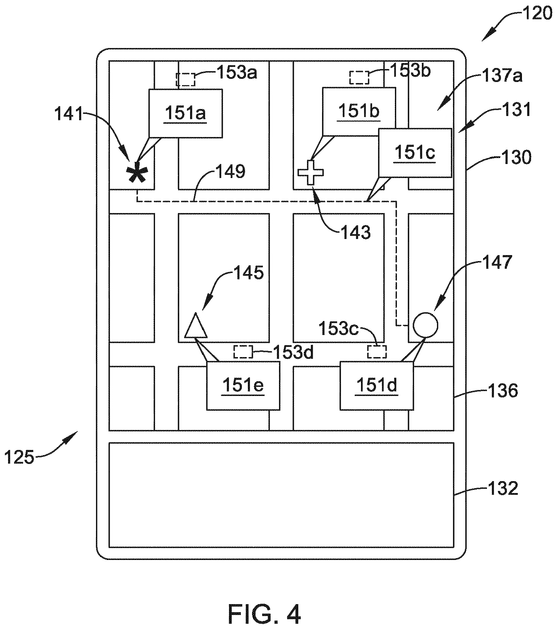

Figure 4 displays an alternative interactable map 137a that mobile device 120 may cause to be displayed at display device 131 in response to receiving a signal from server 100. In the embodiment of Figure 4, instead of icons 141, 143, 145, and 147 being selectable themselves, icons 141, 143, 145, and 147 may merely represent the locations of the alarm or device and the emergency services.

Map 137a may further display information boxes 151a-e for each of 141, 143, 145, and 147 and or route 149. Information boxes 151a-e may display information about each of the associated icons. For instance, information box 151a may display contact information for the owner or operator of the location where the alarm or device is located. Information box 151b may display a phone number, address, and/or name associated with icon 143. Information box 151d may display a phone number, address, and/or name associated with icon 147. Information box 151e may display a phone number, address, and/or name associated with icon 145. Information box 151c may display information associated with route 149, such as a length of route 149 and an estimated time to traverse route 149 in a vehicle. In this way, map 137a may display pertinent information to an incident manager in relation to the alarm or device that communicated the signal to server 100.

Additionally, in the embodiment of Figure 4, instead of icons 141, 143, 145, and 147 being interactable, map 137a may further include icons 153a-d. Icons 153a-d may represent selectable icons that a user may select through interaction with input device 132 (or display device 131, where display device 131 is a touch-sensitive display). Upon selection of icons 153a-d, mobile device 120 may initiate a communication using information (e.g. a phone number of e-mail address) associated with the corresponding icon. In other embodiments, icons 153a-d are not necessary and information boxes 151a-e themselves are selectable to cause mobile device 120 to initiate a communication.

In still further embodiments, instead of maps 137 and 137a being separate embodiments, upon receiving a selection of one of icons 141, 143, 145, or 147, as depicted in map 137 in Figure 3, mobile device 120 may cause an information box, such as information boxes 151a-d displayed in map 137a in Figure 4, to be displayed. Additionally, mobile device 120 may cause an icon, such as one of icons 153a-d, to be displayed next to the corresponding information box. Accordingly, only once the user has selected the information box or the newly displayed icon may mobile device 120 initiate a communication.

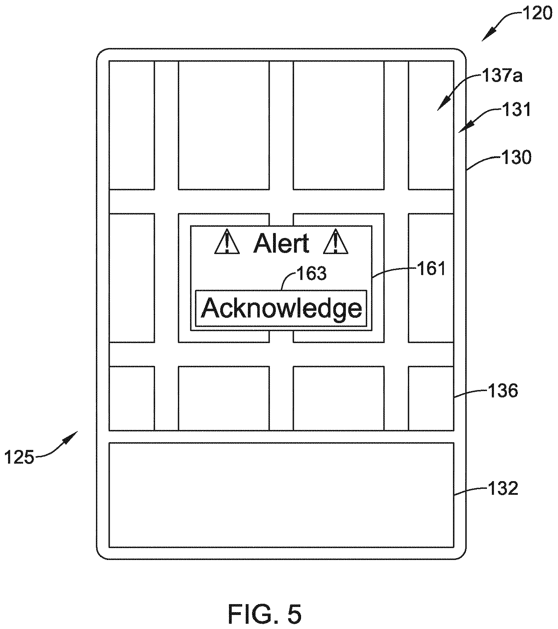

In some further embodiments, mobile device 120 may communicate a signal back to server 100. For instance, mobile device 120 may communicate an indication of acknowledgement back to server 100. Figure 5 depicts an example where GUI display alert box 161, including an acknowledgement button 163. In these embodiments, before mobile device 120 may cause display device 131 to display map 137 or 137a, a user may need to acknowledge receipt of the signal from server 100. In the embodiment of Figure 5, this is done by a user interacting with alert box 161 by selecting acknowledgement button 163 by way of input device 132, or display device 131 where display device 131 is a touch-sensitive display.

Once a user selects display device 131, mobile device 120 may communicate an acknowledgement signal back to server 100 indicating that a user has been notified of the signal sent from server 100 to mobile device 120. This may ensure that an incident causing an alarm or other device to trip has been seen by the user of mobile device 120 so the user may manage the incident in a timely manner.

In other embodiments, instead of displaying alert box 161 and/or acknowledgement button 163, mobile device 120 may immediately display map 137 or 137a without waiting for an acknowledgement from the user. Mobile device 120 may then communicate an acknowledgement to server 100 after mobile device 120 has initiated a communication by a user selecting one of icons 141, 143, 145, and/or 147. In this manner, mobile device 120 may ensure that not only has a user seen the indication communicated by server 100, but the user has taken some action in response to the indication.

In some further alternative embodiments, after communicating a signal for mobile device 120, server 100 may begin a timer. Server 100 may cease the timer once server 100 has received an acknowledgement from mobile device 120. If the timer runs out before server 100 has received an acknowledgment from mobile device 120, server 100 may communicate a signal to a second mobile device. This process may repeat until server 100 has received an acknowledgment from a mobile device. In some embodiments the timer may be between about one minute and about ten minutes. In further embodiments, the timer may be about two minutes to about five minutes.

In still further embodiments, after receiving a signal from an alarm or other device, server 100 may communicate signals to multiple mobile devices. Upon receiving a signal from a first one of the mobile devices, server 100 may send additional communications to the other mobile devices. The additional communication may indicate that no further action is necessary, as another person has responded to the communication.

Although various features may have been described with respect to less than all examples, this disclosure contemplates that those features may be included on any example. Further, although the examples described herein may have omitted some combinations of the various described features, this disclosure contemplates examples that include any combination of each described feature. Accordingly, departure in form and detail may be made without departing from the scope of the present disclosure.

Those skilled in the art will recognize that the present disclosure may be manifested in a variety of forms other than the specific examples described and contemplated herein. For instance, as described herein, various examples include one or more modules or schematic components described as performing various functions. However, other examples may include additional modules or schematic components that split the described functions up over more modules or components than that described herein. Additionally, other examples may consolidate the described functions into fewer modules or components.

### Additional Examples

In a first example, a mobile device may comprise a user interface including a display, a network interface, and a controller operably coupled to the user interface and the network interface. According to the present invention, the controller is configured to receive an indication of an alarm and an alarm location via the network interface, and display, on the display, a map. The map comprises an alarm icon representing the received alarm, the alarm icon placed on the map at the alarm location and an emergency service icon representing an emergency service that services the alarm location, the emergency service that services the alarm location having an emergency service location, the emergency service icon placed on the map at the emergency service location. The controller is further configured to accept a selection of the emergency service icon via the user interface and upon selection of the emergency service icon, initiate a communication with the emergency service that services the alarm location.

Additionally, or alternatively, the communication may comprise at least one of: a telephone call, a text message, and an e-mail.

Additionally, or alternatively, in any of the examples described above with respect to the first example, the display may comprise a touch sensitive display, and selection of the emergency service icon may comprise touching the emergency service icon on the display.

The emergency service comprises at least one of: a fire department, a police department, a security service, an ambulance service, and a hospital.

Additionally, or alternatively, in any of the examples described above with respect to the first example, the controller may be further configured to: display on the display a plurality of emergency service icons, each of the plurality of emergency service icons representing a different emergency service, each of the plurality of emergency services having a corresponding emergency service location, wherein each of the plurality of emergency service icons are placed on the map at the corresponding emergency service location, and accept a selection of one of the plurality of emergency service icons via the user interface, and in response, initiate a communication with the selected emergency service.

Additionally, or alternatively, in any of the examples described above with respect to the first example, one of the plurality of emergency service icons may represent a police department, and another one of the plurality of emergency service icons may represent a fire department.

Additionally, or alternatively, in any of the examples described above with respect to the first example, the mobile device may comprise a smart phone.

Additionally, or alternatively, in any of the examples described above with respect to the first example, the controller may be further configured to: receive via the user interface an acknowledgement of the alarm, and, after receiving the acknowledgement via the user interface, communicate an acknowledgement message via the network interface.

Additionally, or alternatively, in any of the examples described above with respect to the first example, the controller may be further configured display on the display contact information associated with the alarm location.

A second example may comprise a non-transitory computer-readable storage medium with an executable program stored thereon, wherein the executable program instructs a mobile device having a user interface to receive an indication of an alarm and an alarm location via a network interface of the mobile device and display, on a display of the user interface of the mobile device, a map. The map comprises an alarm icon representing the received alarm, the alarm icon placed on the map at the alarm location and an emergency service icon representing an emergency service that services the alarm location, the emergency service that services the alarm location having an emergency service location, the emergency service icon placed on the map at the emergency service location. The instructions may further cause the mobile device to accept a selection of the emergency service icon via the user interface, and, upon selection of the emergency service icon, initiate a communication with the emergency service that services the alarm location.

Additionally, or alternatively, the communication may comprises at least one of a call, a text message, and an e-mail.

Additionally, or alternatively, in any of the examples described above with respect to the first example, the executable program may instruct the mobile device to further display on the display of the mobile device a plurality of emergency service icons, each of the plurality of emergency service icons representing a different emergency service, each of the plurality of emergency services having a corresponding emergency service location, wherein each of the plurality of emergency service icons are placed on the map at the corresponding emergency service location, and accept a selection of one of the plurality of emergency service icons via the user interface, and in response, initiate a communication with the selected emergency service.

Additionally, or alternatively, in any of the examples described above with respect to the first example, one of the plurality of emergency service icons may represent a police department, and another one of the plurality of emergency service icons may represent a fire department.

Additionally, or alternatively, in any of the examples described above with respect to the first example, the mobile device may be a smart phone and wherein the executable program may be an application on the smart phone.

Additionally, or alternatively, in any of the examples described above with respect to the first example, the executable program may further instruct the mobile device to receive via the user interface of the mobile device an acknowledgement of the alarm, and after receiving the acknowledgement via the user interface, communicate an acknowledgement message via the network interface of the mobile device.

Additionally, or alternatively, in any of the examples described above with respect to the first example, the executable program may further instruct the mobile device to display on the display contact information associated with the alarm location.

In a third example, a server may comprise a network interface and a controller operably coupled to the network interface. The controller may be configured to receive an indication of an alarm via the network interface, communicate the indication of the alarm and an alarm location to a first client device via the network interface, and communicate a message to a second client device if the controller does not receive an acknowledgement of the alarm from the first client device within a predetermined period of time.

Additionally, or alternatively, the message may comprise the indication of the alarm and the alarm location.

Additionally, or alternatively, in any of the examples described above with respect to the first example, the acknowledgement may be generated by the first client device based on a predetermined interaction of a user with a user interface of the first client device.

Additionally, or alternatively, in any of the examples described above with respect to the first example, the controller may further communicate a location of an emergency service, a type of emergency service, and a contact information for the emergency service to the first client device.

## Claims

1. A mobile device (120) configured to enable an individual to perform incident management using the mobile device, comprising:
a user interface (125) including a display;
a network interface (124); and
a controller (122)
operably coupled to the user interface and the network interface, the controller configured to:
receive an indication of an alarm having an alarm type and an alarm location via the network interface;
display, on the display, a map comprising; an alarm icon (141)
representing the received alarm and alarm type, the alarm icon placed on the map at the alarm location; an emergency service icon (143; 145; 147)
representing an emergency service that services the alarm type of the alarm and that services the alarm location, the emergency service having an emergency service location, the emergency service icon placed on the map at the emergency service location;
accept a selection of the emergency service icon via the user interface; and
upon selection of the emergency service icon, and in response thereto, initiate a communication with the emergency service that services the alarm location;
wherein the emergency service includes at least one of a fire department, a police department, a security service and an ambulance service.

2. The mobile device of claim 1, wherein the communication comprises at least one of:
a telephone call;
a text message; and
an e-mail.

3. The mobile device of claims 1 through 2, wherein the display comprises a touch sensitive display, and selection of the emergency service icon comprises touching the emergency service icon on the display.

4. The mobile device of claims 1 through 3, wherein the controller is further configured to:
display on the display a plurality of emergency service icons, each of the plurality of emergency service icons representing a different emergency service, each of the plurality of emergency services having a corresponding emergency service location, wherein each of the plurality of emergency service icons are placed on the map at the corresponding emergency service location; and
accept a selection of one of the plurality of emergency service icons via the user interface, and in response, initiate a communication with the selected emergency service.

5. The mobile device of claim 4, wherein one of the plurality of emergency service icons represents a police department, and another one of the plurality of emergency service icons represents a fire department.

6. The mobile device of claims 1 through 5, wherein the mobile device is a smart phone.

7. The mobile device of claims 1 through 6, wherein the controller is further configured to:
receive via the user interface an acknowledgement of the alarm; and
after receiving the acknowledgement via the user interface, communicate an acknowledgement message via the network interface.

8. The mobile device of claims 1 through 7, wherein the controller is further configured to display on the display contact information associated with the alarm location.

9. A non-transitory computer-readable storage medium with an executable program stored thereon, wherein the executable program instructs a mobile device (120) having a user interface (125) to perform the following:
receive an indication of an alarm and an alarm location via a network interface (124) of the mobile device;
display, on a display of the user interface of the mobile device, a map (137) comprising;
an alarm icon (141) representing the received alarm and alarm type, the alarm icon placed on the map at the alarm location;
a plurality of emergency service icons (141; 143; 145), each of the plurality of emergency service icons representing a different emergency service that services the alarm type of the alarm, each of the plurality of emergency services having a corresponding emergency service location, wherein each of the plurality of emerge service icons are placed on the map at the corresponding emergency service location;
accept a selection of one of the plurality of emergency service icons via the user interface; and
upon selection of the emergency service icon, and in response thereto, initiate a communication with the selected emergency service that services the alarm location.

## Patentansprüche

1. Mobilvorrichtung (120), konfiguriert zum Ermöglichen, dass eine Person Vorfallsverwaltung unter Verwendung der Mobilvorrichtung durchführt, umfassend:
eine Benutzerschnittstelle (125), die eine Anzeige enthält;
eine Netzwerkschnittstelle (124); und
eine Steuerung (122), funktionsfähig an die Benutzerschnittstelle und die Netzwerkschnittstelle gekoppelt, die Steuerung konfiguriert zum:
Empfangen einer Angabe eines Alarms mit einem Alarmtyp und einem Alarmort über die Netzwerkschnittstelle;
Anzeigen, auf der Anzeige, einer Karte, umfassend:
ein Alarmsymbol (141), das den empfangenen Alarm und Alarmtyp repräsentiert, wobei das Alarmsymbol auf der Karte an dem Alarmort platziert ist;
ein Notfalldienstsymbol (143; 145; 147), das einen Notfalldienst repräsentiert, der den Alarmtyp des Alarms bedient und der den Alarmort bedient, wobei der Notfalldienst einen Notfalldienstort aufweist, wobei das Notfalldienstsymbol auf der Karte an dem Notfalldienstort platziert ist;
Annehmen einer Auswahl des Notfalldienstsymbols über die Benutzerschnittstelle; und
nach Auswählen des Notfalldienstsymbols und als Reaktion darauf Einleiten einer Kommunikation mit dem Notfalldienst, der den Alarmort bedient;
wobei der Notfalldienst mindestens eines einer Feuerwache, eines Polizeireviers, eines Sicherheitsdiensts und eines Rettungsdiensts enthält.

2. Mobilvorrichtung nach Anspruch 1, wobei die Kommunikation mindestens eines von Folgendem umfasst:
ein Telefonanruf;
eine Textnachricht; und
eine E-Mail.

3. Mobilvorrichtung nach Anspruch 1 bis 2, wobei die Anzeige eine berührungsempfindliche Anzeige umfasst und die Auswahl des Notfalldiensts umfasst, das Notfalldienstsymbol auf der Anzeige zu berühren.

4. Mobilvorrichtung nach Anspruch 1 bis 3, wobei die Steuerung ferner konfiguriert ist zum:
Anzeigen, auf der Anzeige, einer Vielzahl von Notfalldienstsymbolen, wobei jedes der Vielzahl von Notfalldienstsymbolen einen verschiedenen Notfalldienst repräsentiert, jeder der Vielzahl von Notfalldiensten einen korrespondierenden Notfalldienstort aufweist, wobei jedes der Vielzahl von Notfalldienstsymbolen auf der Karte an dem korrespondierenden Notfalldienstort platziert ist; und
Annehmen einer Auswahl eines der Vielzahl von Notfalldienstsymbolen über die Benutzerschnittstelle und als Reaktion darauf Einleiten einer Kommunikation mit dem ausgewählten Notfalldienst.

5. Mobilvorrichtung nach Anspruch 4, wobei eines der Vielzahl von Notfalldienstsymbolen ein Polizeirevier repräsentiert und ein anderes eine der Vielzahl von Notfalldienstsymbolen eine Feuerwache repräsentiert.

6. Mobilvorrichtung nach Anspruch 1 bis 5, wobei die Mobilvorrichtung ein Smartphone ist.

7. Mobilvorrichtung nach Anspruch 1 bis 6, wobei die Steuerung ferner konfiguriert ist zum:
Empfangen, über die Benutzerschnittstelle, einer Bestätigung des Alarms; und
nach Empfangen der Bestätigung über die Benutzerschnittstelle Kommunizieren einer Bestätigungsnachricht über die Netzwerkschnittstelle.

8. Mobilvorrichtung nach Anspruch 1 bis 7, wobei die Steuerung ferner konfiguriert ist zum Anzeigen, auf der Anzeige, von mit dem Alarmort assoziierten Kontaktinformationen.

9. Nicht vergängliches, computerlesbares Speichermedium mit einem darin gespeicherten ausführbaren Programm, wobei das ausführbare Programm eine Mobilvorrichtung (120) mit einer Benutzerschnittstelle (125) anweist, Folgendes durchzuführen:
Empfangen einer Angabe eines Alarms und eines Alarmorts über die Netzwerkschnittstelle (124) der Mobilvorrichtung;
Anzeigen, auf einer Anzeige der Benutzerschnittstelle der Mobilvorrichtung, einer Karte (137), umfassend:
ein Alarmsymbol (141), das den empfangenen Alarm und Alarmtyp repräsentiert, wobei das Alarmsymbol auf der Karte an dem Alarmort platziert ist;
eine Vielzahl von Notfalldienstsymbolen (141; 143; 145), wobei jedes der Vielzahl von Notfalldienstsymbolen einen verschiedenen Notfalldienst repräsentiert, der den Alarmtyp des Alarms bedient, wobei jeder der Vielzahl von Notfalldiensten einen korrespondierenden Notfalldienstort aufweist, wobei jedes der Vielzahl von Notfalldienstsymbolen auf der Karte an dem korrespondierenden Notfalldienstort platziert ist;
Annehmen einer Auswahl eines der Vielzahl von Notfalldienstsymbolen über die Benutzerschnittstelle; und
nach Auswählen des Notfalldienstsymbols und als Reaktion darauf Einleiten einer Kommunikation mit dem ausgewählten Notfalldienst, der den Alarmort bedient.

## Revendications

1. Dispositif mobile (120) configuré pour permettre à un individu d'effectuer la gestion d'incidents en utilisant le dispositif mobile, comprenant :
une interface utilisateur (125) incluant un afficheur,
une interface réseau (124), et
un contrôleur (122) couplé fonctionnellement à l'interface utilisateur et à l'interface réseau, le contrôleur étant configuré pour :
recevoir l'indication d'une alarme comportant le type d'alarme et l'emplacement de l'alarme par l'intermédiaire de l'interface réseau,
afficher, sur l'afficheur, une carte comprenant :
une icône d'alarme (141) représentant l'alarme reçue et le type d'alarme, l'icône d'alarme étant placée sur la carte au niveau de l'emplacement d'alarme,
une icône de service d'urgences (143 ; 145 ; 147) représentant un service d'urgences qui prend en charge le type d'alarme de l'alarme et qui prend en charge l'emplacement de l'alarme, le service d'urgences comportant un emplacement de service d'urgences, l'icône du service d'urgences étant placée sur la carte à l'emplacement du service d'urgences,
accepter la sélection de l'icône du service d'urgences par l'intermédiaire de l'interface utilisateur, et
lors de la sélection de l'icône du service d'urgences, et en réponse à celle-ci, initier une communication avec le service d'urgences qui prend en charge l'emplacement d'alarme,
dans lequel le service d'urgences inclut au moins l'un parmi : un service d'incendie, un poste de police, un service de sécurité et un service d'ambulance.

2. Dispositif mobile selon la revendication 1, dans lequel la communication comprend au moins l'un parmi :
un appel téléphonique,
un message textuel, et
un message électronique.

3. Dispositif mobile selon les revendications 1 à 2, dans lequel l'afficheur comprend un afficheur tactile, et où la sélection de l'icône du service d'urgences comprend l'effleurement de l'icône du service d'urgences sur l'afficheur.

4. Dispositif mobile selon les revendications 1 à 3, dans lequel le contrôleur est en outre configuré pour :
afficher sur l'afficheur une pluralité d'icônes de services d'urgences, chacune de la pluralité d'icônes de services d'urgences représentant un service d'urgences différent, chacune de la pluralité d'icônes de services d'urgences comportant un emplacement correspondant de service d'urgences, chacune de la pluralité d'icônes de services d'urgences étant placée sur la carte au niveau de l'emplacement correspondant du service d'urgences, et
accepter la sélection de l'une de la pluralité d'icônes de services d'urgences par l'intermédiaire de l'interface utilisateur, et en réponse initier une communication avec le service d'urgences sélectionné.

5. Dispositif mobile selon la revendication 4, dans lequel l'une de la pluralité d'icônes de services d'urgences représente un poste de police, et une autre de la pluralité d'icônes de services d'urgences représente un service d'incendie.

6. Dispositif mobile selon les revendications 1 à 5, dans lequel le dispositif mobile est un téléphone intelligent.

7. Dispositif mobile selon les revendications 1 à 6, dans lequel le contrôleur est en outre configuré pour :
recevoir un accusé de réception de l'alarme au travers de l'interface utilisateur, et
après avoir reçu l'accusé de réception au travers de l'interface utilisateur, transmettre un message d'accusé de réception au travers de l'interface réseau.

8. Dispositif mobile selon les revendications 1 à 7, dans lequel couleurs est en outre configuré pour :
afficher sur l'afficheur des informations de contacts associés à l'emplacement d'alarme.

9. Support non transitoire de stockage pouvant être lu par ordinateur comportant, stocké, un programme exécutable, le programme exécutable ordonnant à un dispositif mobile (120) comportant une interface utilisateur (125) d'exécuter les actions suivantes :
recevoir l'indication d'une alarme et de l'emplacement de l'alarme par l'intermédiaire d'une interface réseau (124) du dispositif mobile,
afficher, sur l'afficheur de l'interface utilisateur du dispositif mobile, une carte (137) comprenant :
une icône d'alarme (141) représentant l'alarme reçue et le type d'alarme, l'icône d'alarme étant placée sur la carte au niveau de l'emplacement d'alarme,
une pluralité d'icônes de services d'urgences (141 ; 143 ; 145), chacune de la pluralité d'icônes de services d'urgences représentant un service d'urgences différent qui prend en charge le type d'alarme de l'alarme, chacune de la pluralité d'icônes de services d'urgences comportant un emplacement correspondant de service d'urgences , chacune de la pluralité d'icônes de services d'urgences étant placée sur la carte à l'emplacement du service d'urgences correspondant,
accepter la sélection de l'une de la pluralité d'icônes de services d'urgences par l'intermédiaire de l'interface utilisateur, et
lors de la sélection de l'icône du service d'urgences, et en réponse à celle-ci, initier une communication avec le service d'urgences sélectionné qui prend en charge l'emplacement d'alarme.
